# EUROPEAN PATENT APPLICATION

(11) **EP 2 993 033 A1**
(43) Date of publication of application: **09.03.2016**
(21) Application number: 14791079.8
(22) Date of filing: 25.04.2014
(51) Int. Cl.: B29D 30/56, B60C 11/00, B60C 11/02

(54) **TIRE MANUFACTURING METHOD AND TIRE**

(30) Priority: 01.05.2013 JP 2013096599
(71) Applicant: Bridgestone Corporation, Tokyo 104-8340 (JP)
(72) Inventor: MATSUNAGA Midori, Kodaira-shi Tokyo 187-8531 (JP)
(74) Representative: Oxley, Robin John George
(86) International application number: PCT/JP2014/061666
(87) International publication number: WO 2014/178338

(57) **Abstract**

A tire manufacturing method and a tire manufactured by the method, featuring an optimum tread thickness to reduce heat generation in the tread during vehicular travel and improve the rolling performance of the tire. The method includes the steps ofincluding cure-molding a top rubber, which serves as the tread surface coming in contact with the road surface, cure-molding a base tire having a base rubber on its outer periphery to which the top rubber is bonded, and forming a tire by integrating the top rubber and the base tire together. The tire is characterized in that the loss tangent (tan δ) of the base rubber is smaller than the loss tangent (tan δ) of the top rubber, the 100% Mod of the base rubber is within a range of 60% to 85% of the 100% Mod of the top rubber, and the thickness of the base rubber is within a range of 10% to 30% of the total thickness of the tread on the tire.

## Description

### BACKGROUND OF THE INVENTION

### 1. Field of the Invention

The present invention relates to a tire manufacturing method and a tire manufactured thereby, and more particularly to a method for manufacturing a tire by integrating individually cure-molded base tire and top rubber together and a tire thus manufactured.

### 2. Description of the Related Art

In a known tire manufacturing method, an uncured top rubber, which serves as the tread surface of a tire, is applied on a base rubber, which forms the outer periphery of an uncured base tire, and these two parts are cure-molded in a mold into a single tire assembly. As a drawback of this method, the uncured base rubber and top rubber, which constitute the tread of a tire, can develop undulation or heaving due to slippage along the boundary between the top rubber and the base rubber during the cure-molding in the mold. The undulation, in turn, can entail variation in the rigidity of the tread, which may bring about irregular (uneven) wear of the tire.

To prevent this undulation from occurring, there is a known method for manufacturing a tire such as disclosed in WO 2012/114549. In this method, the top rubber and the base tire are cure-molded individually, or separately from each other. Then a bonding rubber layer is formed on the outer periphery of the base rubber of the base tire before the top rubber is applied to the bonding rubber layer. Then through the curing of the bonding rubber layer, the top rubber and the base tire are integrated together to form a tire. However, the top rubber, if it is thin at the groove bottoms, can easily tear if handled roughly in the process of its application to the base tire, for instance. And this may result in the production of a defective tire. Therefore the top rubber is normally formed with a proper thickness that will prevent its tearing.

Yet, when the thickness of the top rubber at groove bottoms is determined with its handling taken into consideration, the total thickness of the tread, which is the thickness of the top rubber plus the thickness of the base rubber, will become greater than the thickness of the tread of a tire manufactured by the conventional method. The result will be an increase in heat generation due to greater stress occurring in the tread during vehicular travel. This, in turn, will lead to poor rolling performance and irregular wear of the tire.

### RELEVANT DOCUMENT

### REFERENCE1: WO2012/114549

### SUMMARY OF THE INVENTION

### PROBLEM TO BE RESOLVED

The present invention provides a tire manufacturing method in which individually cure-molded top rubber and base tire are integrated together. The purpose of the invention to provide a tire manufacturing method and a tire manufactured thereby which feature improved rolling performance with heat generation controlled by optimizing the thickness of the tread.

To solve the foregoing problems, the tire manufacturing method according to this invention includes the steps of cure-molding a top rubber, which serves as the tread surface coming in contact with the road surface, cure-molding a base tire having a base rubber on its outer periphery to which the top rubber is bonded, and forming a tire by integrating the top rubber and the base tire together. With this tire, the loss tangent (tan δ of the base rubber is smaller than the loss tangent (tan δ of the top rubber. The 100% Mod (modulus at 100% elongation) of the base rubber is within a range of 60% to 85% of the 100% Mod of the top rubber. And the thickness of the base rubber is within a range of 10% to 30% of the total thickness of the tread on the tire. The arrangement as described above reduces heat generation in the tire, thus realizing the manufacture of a tire featuring improved rolling performance and little irregular wear.

### BRIEF DESCROPTION OF THE DRAWINGS

FIG. 1 is a cross-sectional view of a tire.
FIG. 2 is a table showing the performances of Example and Comparative Example tires.

### DETAILED DESCRIPTION OF THE INVENTION

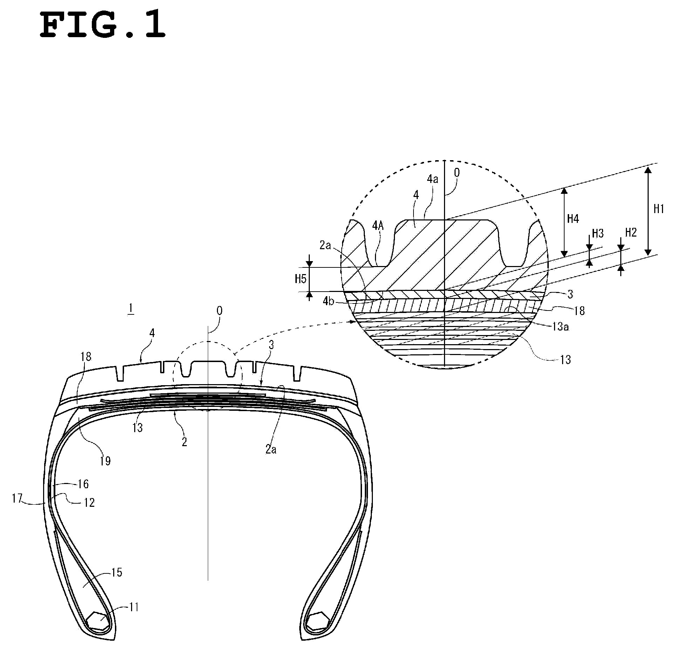

FIG. 1 is a cross-sectional view of an exemplary embodiment of a tire with cure-molded base tire and tread integrated together by a tire manufacturing method according to the present invention. As shown in FIG. 1, the tire 1 includes a base tire 2, a cushion rubber 3, and a top rubber 4.

The base tire 2 includes bead cores 11, each consisting mainly of cord members, a carcass 12, a belt layer 13, bead fillers 15, each consisting mainly of plural kinds of rubber members covering a skeleton of cord members, an inner liner 16, side rubbers 17, and a base rubber 18.

The bead cores 11 are each a ring-shaped member of steel cords called bead cords bundled together and placed in a radially inner position on either side of the base tire. The carcass 12, which is in a toroidal shape, has its portions wrapped around a pair of bead cores 11 and its reinforcement cords oriented radially. The belt layer 13 is a plurality of belts layered on top of one another. Each belt of the belt layer 13 is designed such that the reinforcement cords extend obliquely in relation to the circumferential direction of the base tire, and overlapping belts are stacked in such a manner that their reinforcement cords intersect each other.

The bead fillers 15 are each placed directly on the radially outer side of the bead core 11 in such a manner as to reinforce the bead portion of the base tire 2. The bead filler 15 is wrapped up together with the bead core 11 by the edge part of the carcass 12. The inner liner 16 is provided to cover the entire inner peripheral surface of the carcass 12. Note that an under-belt cushion rubber 19 is disposed between the underside of each end portion of the belt layer 13 and the carcass 12. The under-belt cushion rubber 19 serves as a cushion at each end portion of the belt layer 13, thus preventing separation of the belt layer 13 from the adjacent rubber members.

The side rubbers 17, which cover the outer side surfaces of the carcass 12, form the side regions of the base tire 2.

The base rubber 18, which is so disposed as to cover the outer periphery the belt layer 13 and the top ends of the side rubbers 17, forms the outer periphery of the base tire 2. This outer peripheral portion is formed into a top rubber bonding surface 2a of a predetermined shape to which the top rubber 4 is bonded. As shown in the cross section of FIG. 1, the top rubber bonding surface 2a is formed into a smooth and flat surface. Note that the smooth and flat surface meant here is a surface in a straight line or in an arcing curve with a large radius of curvature convex or concave in the radial direction from axial end to end of the top rubber bonding surface 2a. In the present embodiment, the top rubber bonding surface 2a is formed in an arc as shown in the figure. In this case, the arcing curve whose center of curvature is located closer to the center of the tire is formed with a single radius of curvature or gradually smaller radius of curvature from the tire equator O to the axial edge.

The rubber to be used for this base rubber 18 has a loss tangent (tan δ) which is smaller than the loss tangent (tan δ) of the top rubber 4 to be discussed later and a 100% Mod (modulus at 100% elongation) which is within a range of 60% to 85% of the 100% Mod of the top rubber 4. Here, the loss tangent (tan δ) is a value measured at 25°C temperature, 2% distortion, and 52 Hz frequency. It is a value indicating how much energy is absorbed (turned into heat) when the material is deformed. Also, the 100% Mod is a tensile stress obtained by a tension test on a rubber test piece prepared according to JIS K 6251 in which the force applied at 100% elongation, or twice as long test piece, is divided by the cross-sectional area of the test piece before the test. It may also be called the tensile stress at 100% elongation, for instance.

It should be noted that the loss tangent (tan δ) of the top rubber 4 and that of the base rubber 18 are calculated using the storage elastic modulus E' . And the storage elastic modulus E' and the loss tangent (tan δ) of the top rubber 4 and the base rubber 18 are based on the values measured at a frequency of 52 Hz, an initial distortion factor of 2%, a dynamic distortion factor of 2%, and a temperature of 25°C.

It is also preferable that the 100% Mod of the rubber used as the base rubber 18 is 1.6 MPa or above. If the 100% Mod of the base rubber 18 is set below 1.6 MPa, then the base rubber 18 will be too soft to prevent the occurrence of lateral shaking of the top rubber 4 which is bonded to the base rubber 18. And this will generate heat in the tread consisting of the base rubber 18 and the top rubber 4, thus causing a drop in the rolling performance of the tire. Hence, the use of a rubber whose 100% Mod is 1.6 MPa or above for the base rubber 18 prevents the lateral shaking of the tread and consequently improves the rolling performance of the tire.

Further, it is more preferable that the 100% Mod of the rubber to be used as the base rubber 18 is within a range of 75% to 80% of the 100% Mod of the top rubber 4. As such, the running strains in the tire are absorbed in a well-balanced manner by the top rubber 4 and the base rubber 18, thereby reducing heat generation in the tread and improving the rolling performance of the tire.

The thickness H2 of the base rubber 18 is set within a range of 10% to 30% of the total thickness H1 of the tread. The total thickness H1 of the tread refers to the thickness from the outer periphery 13a of the belt layer 13 to the surface 4a of the top rubber 4 at the tire equator O. That is, the layer thickness H1 of the tread is the sum of the thickness H2 of the base rubber 18, the thickness H3 of the cushion rubber 3, and the thickness H4 of the top rubber 4 (H1 = H2 + H3 + H4).

Note that the thickness H2 of the base rubber 18 can be defined as the distance between the curve along the outer periphery 13a of the belt layer 13 and the surface 1a of the base tire, which is the outer periphery of the base rubber 18, in the normal direction of the curve. Also, the total thickness H1 of the tread can be defined as the distance between the curve along the outer periphery 13a of the belt layer 13 and the surface 4a of the top rubber 4 in the normal direction of the curve.

With the thickness H2 of the base rubber 18 set within the above-mentioned range, the running strains of the tire during vehicular travel can be absorbed in a well-balanced manner. For example, if the thickness H2 of the base rubber 18 is in excess of 30% of the total thickness H1 of the tread, the rolling resistance will increase and thus the rolling performance will drop because the volume of the tread, which is a factor of heat generation, increases. In addition, with the proportion of the base rubber 18, which is softer than the top rubber 4, increasing in the tread, friction during vehicular travel will cause lateral shaking in the tread, which will adversely affect the steering stability of the vehicle. Also, if the thickness of the base rubber is less than 10% of the total thickness H1 of the tread, the running strains in the tread can no longer be absorbed in a well-balanced manner, and the running strains must be absorbed solely by the top rubber 4. Under such conditions, the top rubber 2 will heat up abnormally, thus aggravating the rolling performance of the tire.

Applied to the top rubber bonding surface 2a formed by the outer periphery of the base rubber 18 of the base tire 2 is an uncured bonding rubber 3, called the cushion rubber, to which the top rubber 4 is bonded. For this bonding rubber 3, a rubber formed into a sheet of a predetermined thickness or a rubber in the form of a liquid is used, for instance. The bonding rubber 3 is then formed uniformly on the top rubber bonding surface 1a to a predetermined thickness H3. To improve the rolling performance of the tire, the bonding rubber 3 is formed preferably to a thickness H3 of 1 mm or less and more preferably into a uniform layer as thin as practical.

The top rubber 4, which is cure-molded into a strip of a predetermined length or a ring, is bonded to the top rubber bonding surface 2a of the base tire 2 via the bonding rubber 3. One of the surfaces of the top rubber 4 is formed with a tread pattern, whereas the other of the surfaces is formed as a bonding surface 4b of a predetermined shape corresponding to the shape of the top rubber bonding surface 2a.

The top rubber 4 is formed such that the groove bottom thickness H5, which is the distance from the groove bottom 4A of the tread pattern to the bonding surface 4b, is 2 mm or more. This prevents the tearing at the groove bottom during the handling of the top rubber 2. Preferably, the grooves should be formed such that the groove bottom thickness H5 is within a range of 2 mm to 4 mm. If the groove bottom thickness H5 is thicker than necessary, the volume of the rubber forming the bonding surface 4b of the top rubber 4 will become too large. Then the heat dissipation of the tire will be dwindled, thus causing an increase in rolling resistance (a drop in rolling performance). Therefore, the groove bottom thickness H5 should be 2 mm or more, and preferably set within a range of 2 mm to 4 mm.

A description will now be given of a tire manufacturing method according to the present invention.

A tire 1 is manufactured through the process of molding a top rubber, the process of molding a base tire, the process of forming a bonding rubber layer, the process of applying the top rubber, and the process of curing the tire assembly.

### (Process of molding a top rubber)

In the process of molding a top rubber, the top rubber 4 is cure-molded by curing at predetermined temperatures an uncured top rubber member, in the form of a strip of predetermined thickness and length, between a die having a surface for forming a tread pattern and a die having a surface for forming a bonding surface 4b, for instance. The top rubber 4 is molded such that thickness H5 from the groove bottom 4A of the tread pattern to the bonding surface 4b is 2 mm or more, or within a range of 2 mm to 4 mm.

### (Process of molding a base tire)

In the process of molding a base tire, an uncured inner liner rubber member in a sheet form, which will become the inner liner 16, is applied circumferentially around a cylindrical building drum, and an uncured carcass member in a sheet form, which will become the carcass 12, is applied around the outer periphery of the inner liner rubber material. Then a member material combining the bead core 11 and the bead filler 15 is fitted to each side of the periphery of the carcass material from each side of the building drum, and the bead core and bead filler rubber members are wrapped up by the carcass member by turning up its end portions to form the bead regions. Next, an expansion means incorporated in the building drum is operated to expand the axial center of the stacked group of base tire members to form it into a toroidal shape. Now under-belt cushion rubber members are applied around the carcass member along each axial end of the base tire, and rotation-center-side side rubber members are applied in both regions corresponding to the side regions of the base tire 2 rising from the right and left bead regions. Then a plurality of uncured belts, each formed in a strip shape, are wound in a stack of layers around the outer periphery of the most extended middle portion of the carcass member to form a belt layer 13. Then side rubber members are applied along the axially outer sides of the belt layer 13. Next, a base rubber member, which will become the base rubber 18, is applied over the outer periphery of the belt layer 13 and the end portions of the right and left side rubber members to form a green base tire. The green base tire is now placed in the mold and cure-molded into a base tire 2. The mold has a molding surface that can shape the base rubber 18 forming the outer periphery of the base tire 2 into a straight line or an arcing curve convex or concave in the tire's radial direction.

### (Process of forming a bonding rubber layer)

A bonding rubber 3 is disposed by applying an uncured cushion rubber, formed in a sheet of a predetermined thickness H3, e.g., 1 mm, one circle around the top rubber bonding surface, which is the outer periphery of the base rubber 18 of the base tire 2 cure-molded in the process of molding the base tire.

### (Process of bonding a top rubber)

A top rubber 4 is bonded to the base tire 2 by applying the top rubber 4 cure-molded in the process of molding the top rubber one circle around the top rubber bonding surface of the base tire 2 having the bonding rubber 3 disposed thereon.

### (Process of curing a tire assembly)

The base tire 2 with the top rubber 4 bonded in the top rubber bonding process is placed inside a curing envelope before it is introduced into a curing unit called an autoclave. As the bonding rubber 3 is heated at predetermined temperatures by adjusting the air pressure between the envelope and the outer surface of the base tire, the base tire 2 and the top rubber 4 are integrated together to produce a tire 1.

### Examples

Hereinbelow, a detailed description is given of the performance of tires manufactured according to the present invention by the use of Examples.

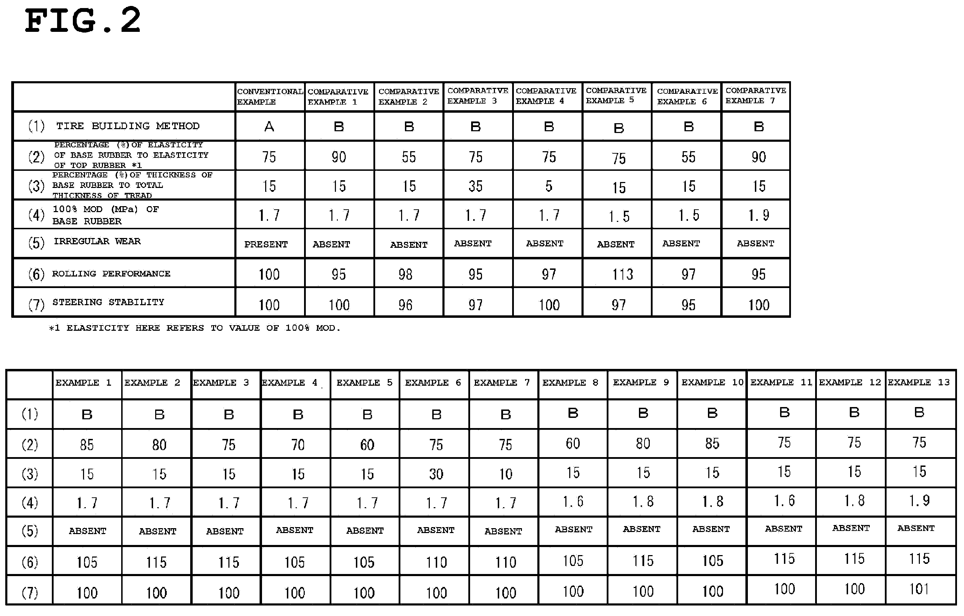

FIG. 2 is a table showing the performance values of tires manufactured by the tire manufacturing method of the present invention (Examples 1 to 13), a tire manufactured by a conventional tire manufacturing method (Conventional Example), and tires manufactured as comparative examples by the tire manufacturing method of the present invention (Comparative Examples 1 to 7). In the tire building method of item (1) in the table of FIG. 2, A represents a tire manufactured by a conventional tire manufacturing method in which an uncured top rubber is placed on the base rubber of an uncured base tire before they are integrated together in a mold, whereas B represents a tire having a top rubber 4 and a base tire 2 integrated together after they are cure-molded individually. Item (2) is the modulus of elasticity of the base rubber 18 represented by the percentage (%) of its 100% Mod to that of the top rubber 4. Item (3) is the thickness H2 of the base rubber 18 represented by the percentage (%) of its thickness to the total thickness H1 of the tread rubber. Item (5) is irregular wear (uneven wear) indicated by its being present or absent after an actual vehicular run of 30,000 km. Item (6), which is the rolling performance of the tire, and item (7), which is the steering stability of the vehicle, are both evaluated values relative to the reference (100) of the Conventional Example. The higher their values, the higher the performance is.

It is apparent that Comparative Examples 1 to 7 and Examples 1 to 13 have developed no irregular wear on account of the difference in tire building method from the Conventional Example. In other words, it has been confirmed that by integrating a top rubber 4 and a base rubber 18 together after they are cure-molded individually, a tire which does not develop irregular wear can be manufactured since no undulation is created by the method in the interfacial boundary between the top rubber 4 and the base rubber 18. Also, the tire of Example 3, which is manufactured to the same specifications as the Conventional Example but by a manufacturing method different therefrom, shows an improved rolling performance over the one manufactured by the conventional method.

Next, let us see the comparison between Comparative Examples 1 and 2 and Examples 1 to 5 when the elasticity of the base rubber 18 is changed from that of the top rubber 4, that is, when the hardness of the base rubber 18 is changed from that of the top rubber 4. Note that while the thickness H2 of the base rubber 18 and the 100% Mod of the base rubber 18 are all the same, the elasticity of the base rubber 18 relative to that of the top rubber 4 is changed as shown in Fig. 2.

Under these conditions, Examples 1 to 5 all show improvement in rolling performance over that of the Conventional Example, whereas the Comparative Examples 1 and 2 show drops in rolling performance.

Comparative Example 1 has the 100% Mod of the base rubber 18 which is set at 90% of the 100% Mod of the top rubber 4.

Therefore, it is considered that the greater hardness of the base rubber 18 in the tread causes the deformation of the top rubber 4 only, thus leading to a declined rolling performance. A similar result is given by Comparative Example 7 which features a greater 100% Mod of the base rubber 18. Hence, it is apparent that a base rubber 18 which is too hard can adversely affect the rolling performance of the tire.

Also, Comparative Example 2 has the 100% Mod of the base rubber 18 which is set at 55% of the 100% Mod of the top rubber 4. Therefore, it is considered that the reduced hardness of the base rubber 18 in the tread causes the deformation of the top rubber 4 only, thus leading to a drop in rolling performance. In this case, the softness of the base rubber 18 causes a declined steering stability also. A similar result is brought by Comparative Example 6 which has a reduced 100% Mod of the base rubber 18. Hence, it is apparent that a base rubber 18 which is too soft can also compromise the rolling performance of the tire.

Accordingly, it has been found that an excellent rolling performance of the tire can be achieved by the choice of a rubber material for the base rubber 18 whose elasticity, or the 100% Mod, is within a range of 60% to 85% of the 100% Mod of the top rubber.

In particular, as shown by Example 2 and Example 3, a tire featuring a better rolling performance can be obtained by setting the elasticity of the base rubber 18 within a range of 75% to 80% of the elasticity of the top rubber 4.

Next, let us see the comparison between Comparative Examples 3 and 4 and Examples 3, 6, and 7 to clarify the effects of the thickness of the base rubber 18 relative to the total thickness H1 of the tread. Note that the percentage of the elasticity of the base rubber 18 to that of the top rubber 4 and the 100% Mod of the base rubber 18 are all the same for the Comparative Examples 3 and 4 and Examples 3, 6, and 7.

Under these conditions, Examples 3, 6, and 7 all show improvement in the rolling performance of the tire over that of the Conventional Example, whereas the Comparative Examples 3 and 4 show drops in rolling performance and Comparative Example 3 shows a drop in steering stability also.

Comparative Example 3 has a base rubber 18 whose thickness is set at 35% of the total thickness H1 of the tread. It is considered therefore that the increase in the volume of the tread, which is a cause of heat generation, raises the rolling resistance, thus reducing the rolling performance of the tire. Additionally, the proportion of the base rubber 18 softer than the top rubber 4 is greater in the tread. This may cause lateral shaking in the tread due to the friction during vehicular travel, which may have an adverse effect on the steering stability of the vehicle.

Also, Comparative Example 4 has a base rubber 18 whose thickness H2 is set at 5% of the total thickness H1 of the tread. As a result, running strains of the tire cannot be absorbed in a well-balanced manner by the tread such that the running strains have to be absorbed by the top rubber 4 alone. Therefore, the top rubber 2 may be heated abnormally with the result of reduced rolling performance. In this case, with the rigidity of the tread maintained, there is no drop in the evaluation of the steering stability.

As shown by Examples 3, 6, and 7, therefore, it is preferable that the thickness of the base rubber 18 is set within a range of 10% to 30% of the total thickness H1 of the tread.

Next, let us see the comparison between Comparative Example 5 and Examples 3, 11, and 13 to clarify the effects of the 100% Mod of the base rubber 18. Note that the thickness H2 of the base rubber 18 and the percentage of the elasticity of the base rubber 18 to that of the top rubber 4 are all the same for the Comparative Example 5 and Examples 3, 11, and 13.

The Comparative Example 5 and the Examples 3, 11, and 13 show improvements in rolling performance over the Conventional Example when the 100% Mod is in a range of 1.5 MPa to 1.9 MPa.

However, the Comparative Example 5 shows a drop in steering stability in contrast to the Examples 3, 11, and 13 and the Conventional Example. This is considered because a base rubber 18 which is too soft in the tread causes lateral shaking in the entirety of the tread and lowers the steering stability. For example, Comparative Example 6, which features a lower percentage of the elasticity of the base rubber 18 to that of the top rubber 4 than Comparative Example 5, that is, a base rubber 18 softer than the top rubber 4, shows drops in both the rolling performance and steering stability. Hence, it is clear that the softness of the base rubber 18 can cause drops in steering stability as well.

Accordingly, it can be concluded that a rubber material whose 100% Mod is 1.6 MPa or above should be used as the base rubber 18.

Also, let us see the comparison between Comparative Examples 6 and 7 and Examples 8 to 10 to clarify the effects of the 100% Mod in combination with the percentage of the elasticity of the base rubber 18 to that of the top rubber 4.

As already mentioned, Examples 8 to 10 having the base rubber 18 whose 100% Mod is 1.6 MPa or above and whose rubber material has the elasticity set in a range of 60% to 85% of the 100% Mod of the top rubber 4 show improvements in the rolling performance of the tire. However, the Comparative Examples 6 and 7, which do not satisfy the above combination, show drops in rolling performance, and the Comparative Example 6 shows a drop in steering stability as well.

That is, it is evident that a base rubber 18 which is too soft in the tread as with Comparative example 6 and a base rubber 18 which is too hard in the tread as with Comparative example 7 cause drops in rolling performance and steering stability.

As described thus far, the test results indicate that a tire 1 featuring better rolling performance and absence of irregular wear can be manufactured when the thickness H2 of the base rubber 18 is set within a range of 10% to 30% of the total thickness H1 of the tread and the hardness of the base rubber 18 is set within a range of 60% to 85% of the hardness of the top rubber 4. Further, a tire with even superior rolling performance can be produced if a rubber whose 100% Mod is 1.6 MPa or above is used for the base rubber 18.

It should be noted that although the foregoing embodiments have been described as having the bonding surface 4b of the top rubber 4 convex in the radially outward direction, this is not to be considered a limitation. The bonding surface 4b of the top rubber 4 may be formed in a straight line or in an arcing curve concave in the radially inward direction.

### Description of Reference Numerals

- 1: tire
- 2: base tire
- 3: bonding rubber
- 4: top rubber
- 13: belt layer
- 17: side rubber
- 18: base rubber
- H1 to H5: thickness

## Claims

1. A method for manufacturing a tire, comprising:
cure-molding a top rubber to serve as a tread surface configured to contact with a road surface;
cure-molding a base tire having a base rubber on an outer periphery thereof to which the top rubber is bonded; and
forming a tire by integrating the top rubber and the base tire together,
wherein a loss tangent (tan δ) of the base rubber is smaller than a loss tangent (tan δ) of the top rubber,
100% Mod of the base rubber is within a range of 60% to 85% of 100% Mod of the top rubber, and
a thickness of the base rubber is within a range of 10% to 30% of a total thickness of the tread on the tire.

2. The method for manufacturing a tire according to claim 1, wherein the 100% Mod of the base rubber is 1.6 MPa or above.

3. The method for manufacturing a tire according to claim 1, wherein the 100% Mod of the base rubber is within a range of 75% to 80% of the 100% Mod of the top rubber.

4. The method for manufacturing a tire according to claim 2, wherein the 100% Mod of the base rubber is within a range of 75% to 80% of the 100% Mod of the top rubber.

5. The method for manufacturing a tire according to claim 1, further comprising applying on the outer periphery of the base rubber a cushion rubber to serve as a bonding layer to which the top rubber is bonded, wherein the 100% Mod of the cushion rubber is within a range of 60% to 85% of the 100% Mod of the top rubber.

6. The method for manufacturing a tire according to claim 2, further comprising applying on the outer periphery of the base rubber a cushion rubber to serve as a bonding layer to which the top rubber is bonded, wherein the 100% Mod of the cushion rubber is within a range of 60% to 85% of the 100% Mod of the top rubber.

7. The method for manufacturing a tire according to claim 3, further comprising applying on the outer periphery of the base rubber a cushion rubber to serve as a bonding layer to which the top rubber is bonded, wherein the 100% Mod of the cushion rubber is within a range of 60% to 85% of the 100% Mod of the top rubber.

8. The method for manufacturing a tire according to claim 4, further comprising applying on the outer periphery of the base rubber a cushion rubber to serve as a bonding layer to which the top rubber is bonded, wherein the 100% Mod of the cushion rubber is within a range of 60% to 85% of the 100% Mod of the top rubber.

9. A tire manufactured by a tire manufacturing method of claim 1.

10. A tire manufactured by a tire manufacturing method of claim 2.

11. A tire manufactured by a tire manufacturing method of claim 3.

12. A tire manufactured by a tire manufacturing method of claim 4.

13. A tire manufactured by a tire manufacturing method of claim 5.

14. A tire manufactured by a tire manufacturing method of claim 6.

15. A tire manufactured by a tire manufacturing method of claim 7.

16. A tire manufactured by a tire manufacturing method of claim 8.
